# EUROPEAN PATENT SPECIFICATION

(11) **EP 1 244 067 B1**
(45) Date of publication and mention of the grant of the patent: **24.03.2010**
(21) Application number: 01310321.3
(22) Date of filing: 11.12.2001
(51) Int. Cl.: G07C 5/08

(54) **Hardened voyage data recorder**
Verstärkte Vorrichtung zur Aufnahme von Navigationsdaten
Enregistreur renforcé de données de navigation

(30) Priority: 06.07.2001 US 899647; 19.03.2001 US 277029 P
(43) Date of publication of application: 25.09.2002
(73) Proprietor: L-3 Communications Corp, New York, NY 10016 (US)
(72) Inventor: Browning, Margaret, Bradenton, FL 34202 (US); Zarling, Andrew, Nokomis, FL 34275 (US); Purdom, Gregory W., Sarasota, FL 34232 (US)
(74) Representative: Robson, Aidan John

(56) References cited:
- EP-A- 0 790 760
- DE-A- 3 744 421
- FR-A- 2 736 456
- GB-A- 2 242 304
- US-A- 4 944 401
- US-A- 6 092 008
- US-A- 6 153 720
- US-A- 6 167 238

## Description

### BACKGROUND OF THE INVENTION

### 1. Field of the Invention

The invention relates to apparatus for recording data regarding the operation of a sea borne vessel. More particularly, the invention relates to apparatus for recording and protecting data leading up to an accident or "incident".

### 2. Brief Description of the Prior Art

It has long been noted that the investigation of maritime accidents and incidents could benefit from the recording of data and audible commands occurring aboard ships. Indeed, many considered this an inevitable technological extension of the time-honored ship's logbook. This desire has culminated in the development of an international standard governing the performance of a Voyage Data Recorder (VDR).

US6153720 discloses a crash-survivable enclosure for protecting a data memory unit used in vehicles. It comprises a shell with an inner surface. The shell defines an interior cavity which contains the data memory unit. The enclosure has a heat absorption composition which lines a portion of the inner surface and substantially surrounds the data memory unit. The composition is capable of exhibiting an endothermic phase transition when subjected to a high temperature environment. The phase transition is typically from a solid phase to a non-solid, flowable phase. The shell can also have a plurality of vents.

US6167238 discloses a system and method for providing a retrievable record of the flight performance of an aircraft and includes a ground data link unit that obtains flight performance data representative of aircraft flight performance during flight of the aircraft. An archival data store is operative to accumulate and store flight performance data during flight of the aircraft. A transceiver is coupled to the archival data store and includes a transmitter that is operative after the aircraft completes its flight and lands at an airport to download the flight performance data that has been accumulated and stored. An airport based receiver receives the communication signal from the aircraft and demodulates the signal to obtain the flight performance data.

DE 3744421 discloses a submerged centrifugal pump mounted using V-clamps held in place with a ring. The pump flange is mounted within a mounting flange which has a conical surface. The conical surface enables the flange to be clamped to the outer housing by a V-clamp which is held in position by a ring.

US4944401 discloses a crash survivable enclosure for flight data recorders used in aircraft and other vehicles. It includes an outer metal shell and an inner shell for enclosing and protecting an information storage device having power, signal, and address lines connected thereto. The memory device is supported inside the shell in a wax filler of the type having a high melting temperature and a high heat of fusion to act as a heat sink for absorbing heat. A second filler of heat insulating material is provided for physically supporting the inner shell and for absorbing impact forces.

FR 2736456 discloses a vehicle data capturing, transmitting and storing system. A central unit records speeds, accelerations as well as engine and system data. Releasing the vehicle brake initiates recording of data. A computer can be connected to the central unit.

GB A 2 242 304 discloses a heat-proof casing for a tape recorder for monitoring electrical signals generated on board ship in an emergency. The casing is releasably connected to a cradle which is mounted on the deck of a ship. The casing comprises an inner chamber accommodating the tape recorder which is to be shielded from the effects of external heat, a duct for electrical wiring extending from the tape recorder within the inner chamber to the outside of the casing, and an inner jacket surrounding the inner chamber and having hollow walls filled with paraffin wax. The paraffin wax is in the solid state at normal ambient temperature but changes to the liquid state when subjected to external heat above a certain level and thereby absorbs external heat. Thus the tape recorder is shielded to a substantial extent from the effects of external heat, generated by a fire on board ship for example.

In 1974 the Safety of Life at Sea (SOLAS) Convention of the International Maritime Organization (IMO) acknowledged the value and expressed the desire of having recorders on ships similar to the "black box" flight recorders for aircraft. This began a long process of establishing international standards and requirements for a Voyage Data Recorder (VDR).

In 1996, VDR requirements, which had been debated for a long time, began to emerge in the navigation and electronics subgroup (NAV) of the IMO. Anticipating an eventual IMO resolution concerning VDRs, IEC (International Electrotechnical Commission) TC80 formed WG11, which began structuring a specification based on preliminary drafts of the NAV requirements. The IMO passed resolution A.861 (20) in November 1997 and the IEC standard 61996 was completed as a Committee Draft for Voting in March 1999. The specification was published in August 2000.

The IEC 61996 Ship borne Voyage Data Recorder Performance Requirements describes data acquisition and storage functions and refers to a "protective capsule" and a "final storage medium". Architecture for complying with this standard has emerged with two major components.

In the first component, the ship's interfaces, data acquisition, and soft recording functions are encompassed in a Data Management Unit (DMU). The DMU is intended for installation in the relatively benign environment of the bridge. The second component is the Hardened Voyage Recorder (HVR) which encompasses the protective capsule and final storage medium. The HVR is designed for survivability and recoverability. It is intended for external installation on the bridge deck or on top of the superstructure.

The primary function of the Hardened Voyage Recorder (HVR) is to protect the data acquired by the Voyage Data Recorder (VDR) so that the data can be used during accident or "incident" investigation.

### SUMMARY OF THE INVENTION

Embodiments of the invention provide a Hardened Voyage Recorder which meets or exceeds the requirements of the IEC 61996 test specifications, for the protective capsule and final storage medium.

Embodiments of the invention also provide a Hardened Voyage Recorder which has a substantial storage capacity.

Further embodiments of the invention provide a Hardened Voyage Recorder which is capable of recording radar data, audio, and other sensor data.

Further embodiments of the invention provide a Hardened Voyage Recorder which has a long life and low operating power.

Further embodiments of the invention provide a Hardened Voyage Recorder which is easy to install and service.

Further embodiments of the invention provide a Hardened Voyage Recorder which easily interfaces with one or more DMUs.

The Hardened Voyage Recorder (HVR) embodying to the invention includes two separable subassemblies.

The first subassembly is a mounting base subassembly designed to be directly fastened to the ship and provide a watertight cable entry for power and data connections.

The second subassembly is a removable hardened memory subassembly which is attached to the mounting base with a quick releasing clamp. The hardened memory subassembly has a bracket for an externally mounted underwater location beacon with dual activation moisture sensors to avoid inadvertent activation due to spray, rain, or hosing off. The HVR is preferably painted a highly visible florescent orange with white reflective labels. The reflective labels contain the required text: VOYAGE DATA RECORDER, DO NOT OPEN, REPORT TO AUTHORITIES.

The mounting base subassembly includes electronics for receiving data and writing data to the memory in the hardened memory subassembly.

According to the presently preferred embodiment, the power connection accepts either 110/220 VAC or 24 VDC and the data connection is an ETHERNET connection. The AC and DC power connections may both be active at the same time. The AC connection is preferably used during normal conditions and the DC connection is preferably coupled to the ship's UPS (uninterrupted power supply).

Further, according to the presently preferred embodiment, the HVR receives data via TCP/IP (terminal connection protocol/internet protocol) over ETHERNET. The HVR is therefore assigned an IP address and is configurable via a "web browser". This also enables the formation of a network of multiple HVSs all coupled to numerous sensors via the ETHERNET network.

The removable hardened memory subassembly preferably includes 1.5 gigabytes of solid state memory which is protected in a "boiler" such as that disclosed in co-owned, U.S. Patent Number 6,706,966 filed 6 July 2001.

### BRIEF DESCRIPTION OF THE DRAWINGS

FIG. 1 is a perspective view of an HVR according to the invention;
FIG. 2 is a side elevation view of an HVR according to the invention;
FIG. 3 is a top view of an HVR according to the invention;

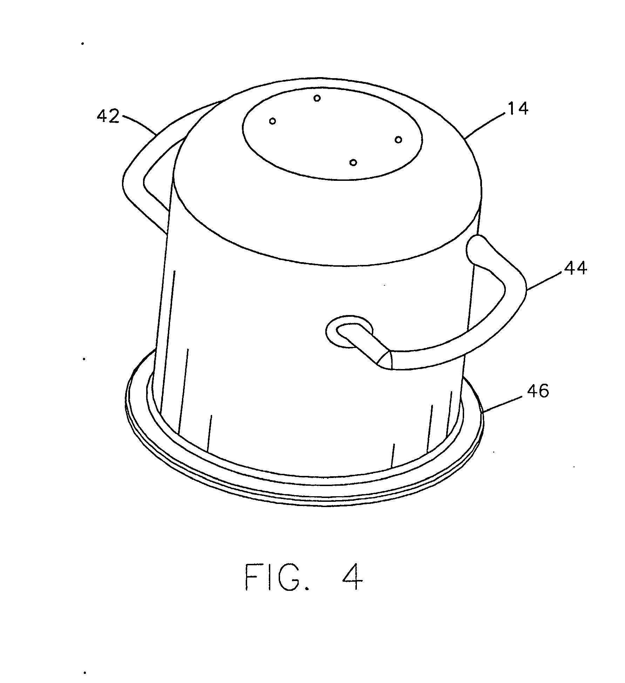

FIG. 4 is a perspective view of the hardened memory subassembly with the beacon bracket removed;
FIG. 5 is a perspective view of the mounting base subassembly;

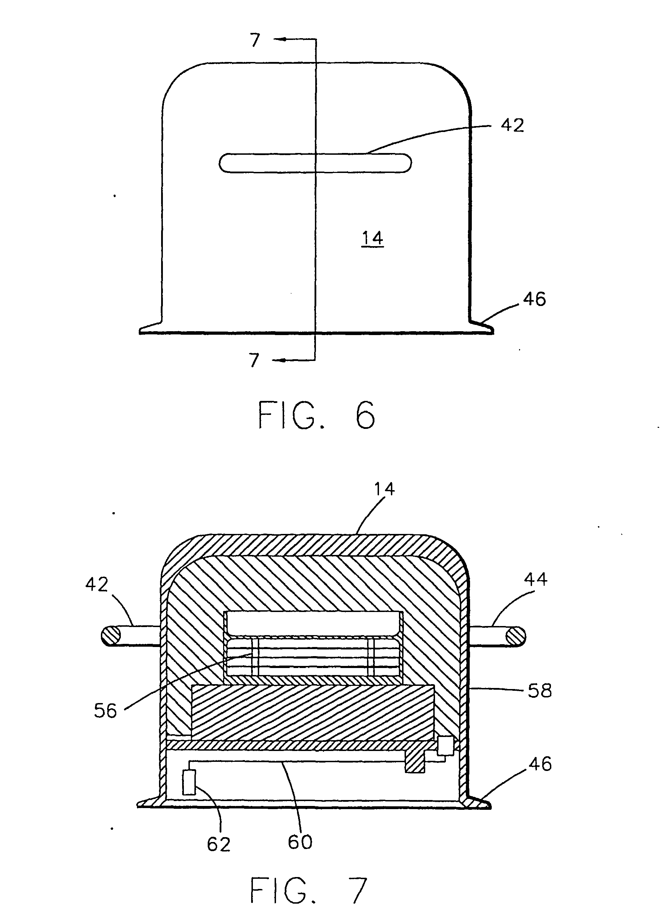

FIG. 6 is a side elevation view of the hardened memory subassembly with the beacon bracket removed;
FIG. 7 is a sectional view taken along line A-A in FIG. 6;
FIG. 8 is a sectional detail of the encircled area of FIG. 2;
FIG. 9 is a side elevation view of the mounting base subassembly;
FIG. 10 is a sectional view taken along line B-B of FIG. 9;
FIG. 11 is a plan view of the mounting base subassembly;
FIG. 11a is a perspective view of a stacked memory boards including memory interface converter chips;
FIG. 12 is a sample "screen shot" of the HVR "home page";
FIG. 13 is a sample screen shot of the HVR login page;
FIG. 14 is a sample screen shot of the HVR network setup page; and
FIG. 15 is a sample screen shot of the HVR device update page.

### DETAILED DESCRIPTION

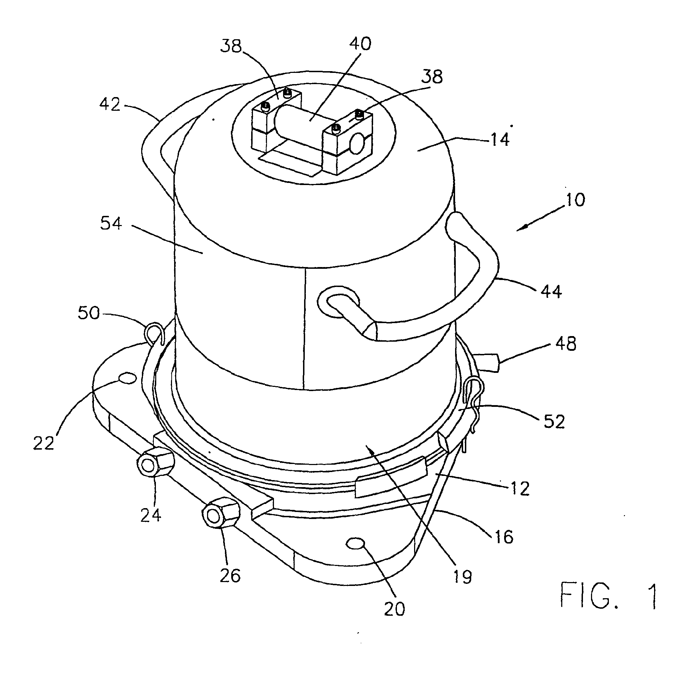

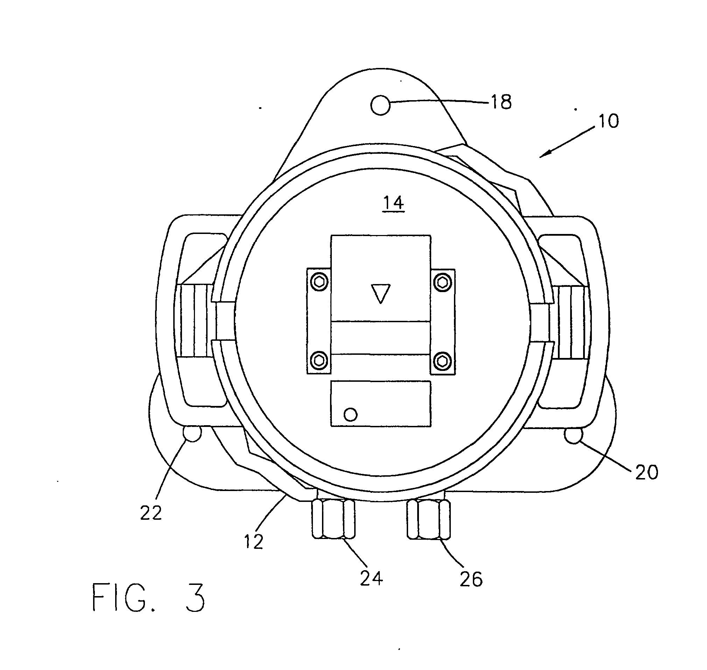

Turning now to Figures 1-3, the Hardened Voyage Recorder (HVR) 10 according to the invention includes two separable subassemblies. The first subassembly 12 is a mounting base subassembly designed to be directly fastened to the ship and provide a watertight cable entry for power and data connections. The second subassembly 14 is a removable hardened memory subassembly which is attached to the mounting base with a quick releasing clamp.

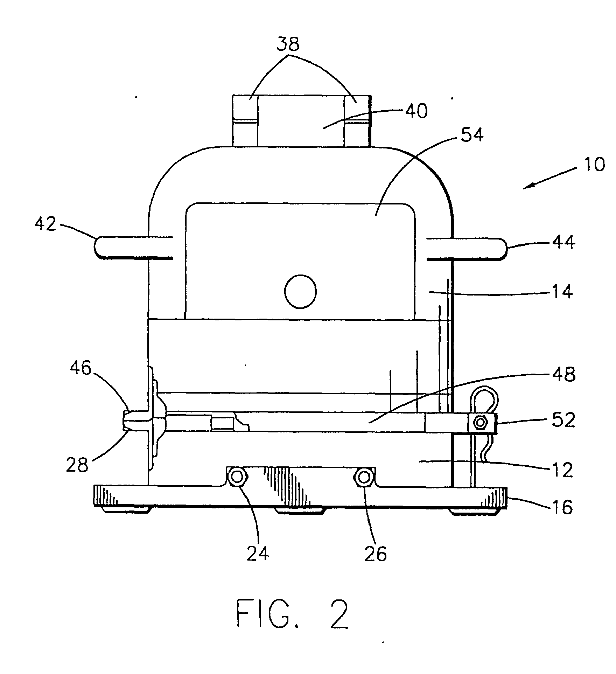

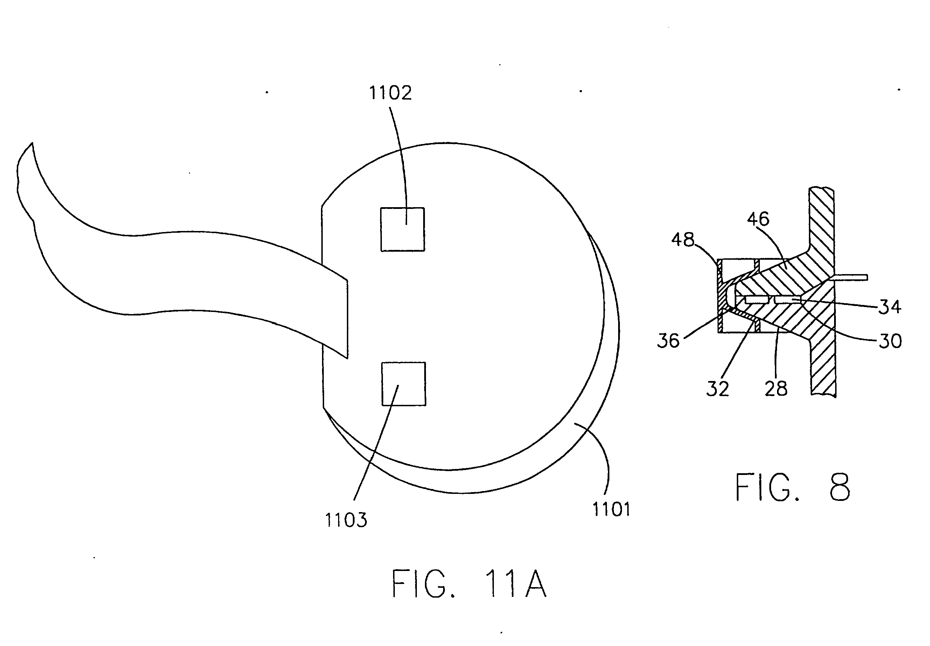

Referring now to the mechanical features of the subassembly 12, as shown in Figures 1-3, the mounting base subassembly 12 has a lower flange 16 defining three mounting holes 18, 20, 22. Two cable connectors 24, 26 are provided for a watertight coupling of power and data cables (not shown). As seen best in Figures 2 and 8-10, the subassembly 12 is also provided with an lower flange 28 which is used to provide a sealing engagement with the removable hardened memory subassembly 14. As seen best in Figure 8, the lower flange 28 is provided with two concentric grooves 30, 32 which are adapted to receive gasket 34 and o-ring 36. 36 is preferably a rubber o-ring for moisture protection. 34 is preferably a wire mesh for EMI protection.

The mechanical features of the hardened memory subassembly 14 include a bracket 38 for an externally mounted underwater location beacon 40. The beacon is provided with dual activation moisture sensors to avoid inadvertent activation due to spray, rain, or hosing off. The subassembly 14 also has two lifting handles 42, 44 and an upper flange 46 which is used to provide a sealing engagement with the subassembly 12 as seen best in Figures 2 and 8.

As shown in Figure 1, the HVR also includes a V-band 48 having two quick release clamps 50, 52. As mentioned above, the HVR is preferably painted a highly visible florescent orange with white reflective labels, e.g. label 54 shown in Figures 1 and 2. The reflective labels contain the required (by IEC 61996) text: VOYAGE DATA RECORDER, DO NOT OPEN, REPORT TO AUTHORITIES. A strip of reflective tape, 19, is shown in FIG. 1, further satisfying the requirements of IEC 61996.

The presently preferred embodiment of the HVR 10 is approximately thirteen inches high and has a diameter of approximately eight inches. The lower flange 16 of the subassembly 12 is substantially triangular and is approximately ten inches per side. The total weight of the HVR is approximately forty one pounds with the base 12 weighing approximately thirteen pounds and the memory subassembly 14 weighing approximately twenty eight pounds.

Before turning to the electronic and software specifications of the subassembly 12, it should be noted that the subassembly 14 includes memory 56 which is protected in a "boiler" 58 such as that disclosed in U.S. Patent Number 6,706,966 .

According to the presently preferred embodiment, electronic access to the memory 56 is provided by a ribbon cable 60 having a (preferably J10) connector 62. The memory is preferably a stacked memory such as that disclosed in U.S. Patent Number 6,706,966 or in U.S. Patent Number 5,969,953, the complete disclosure of which is incorporated by reference herein. More particularly, the memory is preferably of the type utilizing "BGA" packaging (ball grid array packages) as memory components.

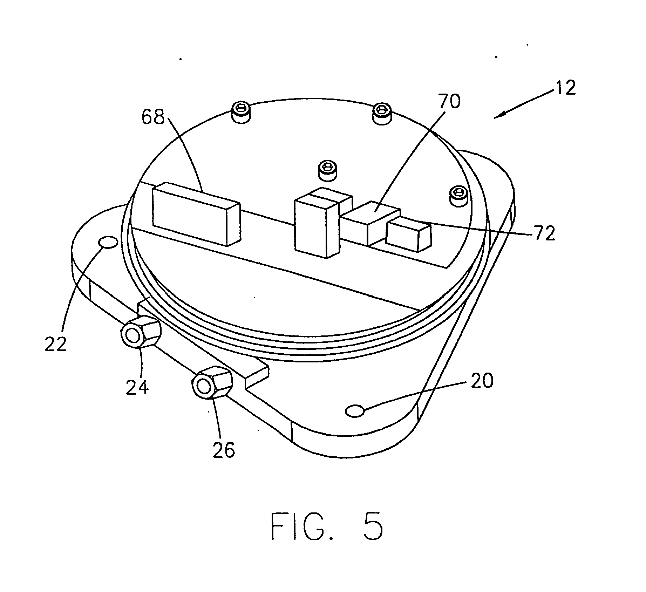

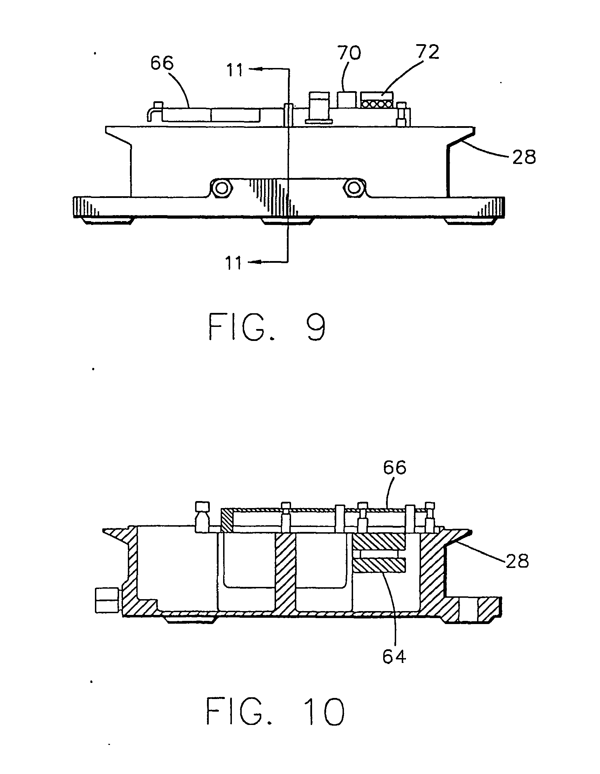

Referring now to Figures 5 and 9-11, the mounting base subassembly 12 includes electronics (partially shown as 64 and 66 in Figures 9 and 10) for receiving data and writing data to the memory in the hardened memory subassembly 14.

According to the presently preferred embodiment, the power connection is provided by a terminal strip 68 which accepts either 110/220 VAC or 24 VDC or both. The data connection is an ETHERNET connection which is provided by either an RJ-45 connector 70 or an optional ETHERNET terminal block 72. The AC and DC power connections may both be active at the same time. The AC connection is preferably used during normal conditions and the DC connection is preferably coupled to the ship's UPS (uninterrupted power supply). The maximum power consumption is preferably fifteen watts.

According to the presently preferred embodiment, the stepped down and bridge rectified AC feeds the same storage capacitor that is fed through a diode by the DC, so the higher voltage at the anodes will provide the operating current. IEC 61996 paragraph 4.5.3 requires a two hour reserve uninterrupted power source (UPS).

When connecting the ship's UPS system to the HVR, either the AC or DC input may be used. Clearly the negative terminal of the capacitor and the primary side of the switching power supply are grounded to the DC return. If AC is the only power wired, a 1K Ohm resistor ties this input ground to the AC safety ground. The primaries of the AC input transformer can be strapped in parallel for 115 Vrms or in series for 230 Vrms by means of jumpers on the terminal board (not shown).

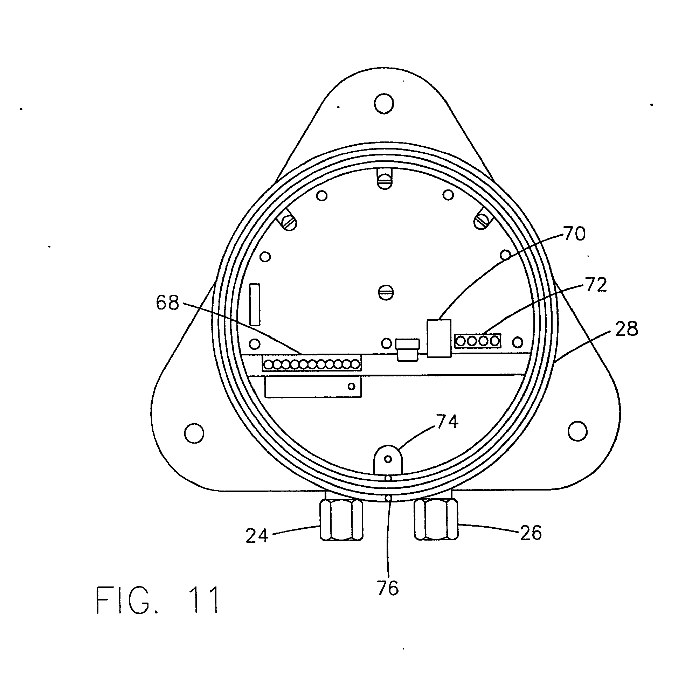

The memory is operated by the DC power from the secondary of the switching transformer, and is isolated from the AC and DC power lines. A secondary ground, which is connected to the case and the ETHERNET shield, must be tied to the hull to prevent voltage difference that could induce corrosion. As shown in FIG. 11, according to a preferred embodiment of the invention, a ground pad 74 is used for grounding. A notch 76 in the lower flange 28 of the subassembly 12 is used to prevent pressure differential in a deep sea pressure environment.

Those skilled in the art will appreciate that the ETHERNET cabling should be shielded to protect it from the expected intense RF fields generated by other shipboard equipment such as radar. The foil shield should end as close as possible to the case after it has passed through the sealing connector 26. The shield's drain wire connects to the ground pad 74 which is located about one inch from the connector 26. Keeping the shield as short as possible inside the case prevents it from re-radiating externally induced signals by using the case as a voltage node. The drain wire at the other end of the ETHERNET cable (at the DMU) should also be grounded to the ship's hull.

As mentioned above, according to the presently preferred embodiment, the memory used in the subassembly 14 is BGA memory. Accordingly, the circuits in the subassembly 14 include one or more MICs (memory interface converter chips) needed to interface (convert between) parallel communications which BGA chips employ and the serial communications path with processor. The MICs need to be able to drive the large number of BGA chips distributed in the preferred stacked memory. The MICs may be located on the circuit board 1101 shown in Figure 11a (MIC chips 1102 and 1103) and/or may be distributed among the memory circuit boards shown in Figure 11a. The processor communicates with the MICs to address memory and the MICs determine which board or stack contains the addressed memory.

Further, as mentioned above, according to the presently preferred embodiment, the HVR receives data via TCP/IP (terminal connection protocol/internet protocol) over ETHERNET. The HVR is therefore assigned an IP address and is configurable via a "web browser". This also enables the formation of a network of multiple HVRs all coupled to numerous sensors via the ETHERNET network.

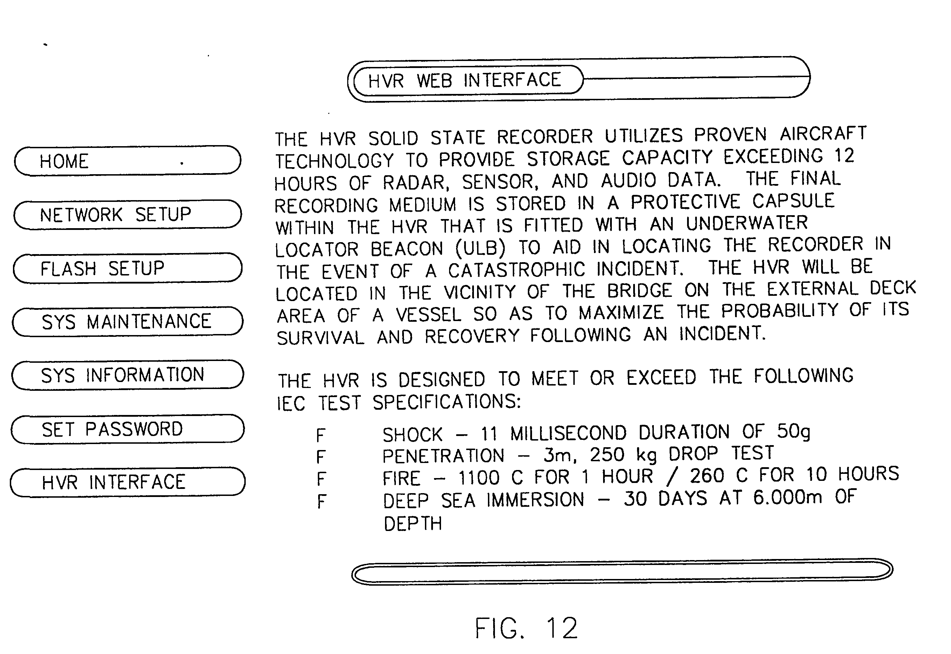

Figures 12-15 illustrate a sample interface to the HVR accessible with any web browser coupled to the ETHERNET network to which the HVR is coupled. Those skilled in the art will appreciate that the ship's ETHERNET network could be connected to the Internet via a satellite link, thus making the HVR available from anywhere in the world.

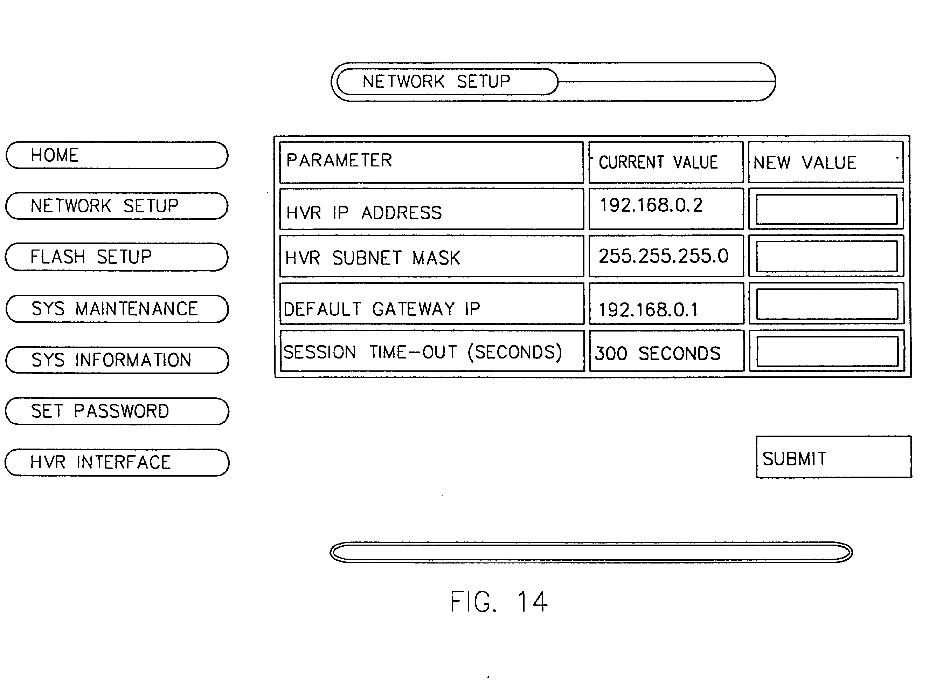

Figure 12 shows a sample HVR homepage. The default URL of the homepage is 192.168.0.2 which is preset at the factory but which can be changed as shown in Figure 14. The homepage Main Menu, provides the main entry point to HVR system configuration setup via a web browser and provides the links for the configuration options. In addition links are available that describe the HVR Interface Details, HVR System Maintenance, and HVR System Information.

The "Network Setup" link shown in Figure 12 links to the web page shown in Figure 14 providing a network hostname and IP address setup data entry form.

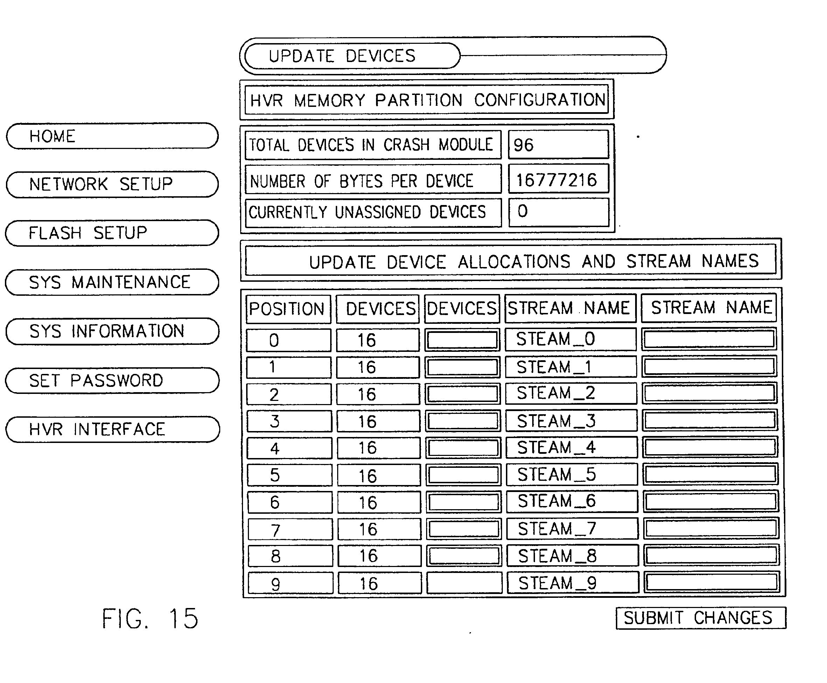

The "Flash Setup" link shown in Figure 12 links to a web page shown in Figure 15 providing a memory partition setup data entry form.

The "Sys Maintenance" link shown in Figure 12 links to a web page (not shown) listing the existing Flash Memory Setup.

The "Sys Information" link shown in Figure 12 links to a web page (not shown) providing specific HVR software and IP address information.

The "Set Password" link shown in Figure 12 links to a web page (not shown) providing a password setup data entry form.

The "HVR Interface" link shown in Figure 12 links to a web page (not shown) providing HVR system interface information.

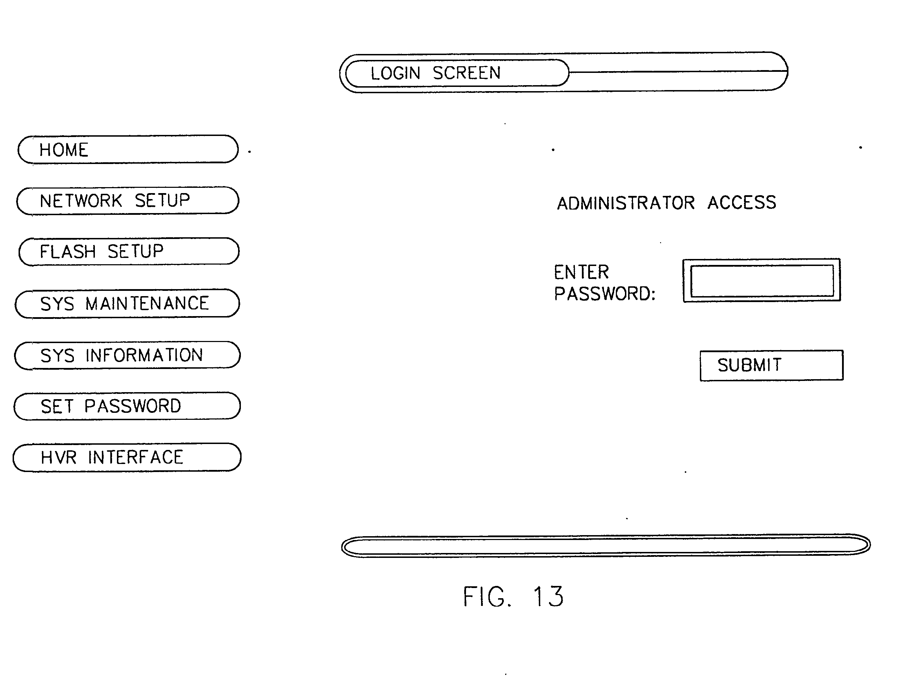

The main menu shown in Figure 12 can be accessed without entering a password, but in order to change any HVR system configurations, a password is required to be entered via the password entry page shown in Figure 13. In particular, a password is required to access the Network Setup, Flash Setup, and Set Password pages. Access to any of these pages times out when idle for 300 seconds (which is configurable as shown in Figure 14) and a password must be re-entered to continue with HVR setup modifications.

The Login Screen of Figure 13 will appear no matter which system configuration button is selected first.

The HVR is shipped from the factory with the following default IP settings:
IP address: 192.168.0.2
Subnet Mask: 255.255.255.0
Default Gateway IP: 192.168.0.1

Those skilled in the art will appreciate that these are the default settings commonly used with "web-accessible" devices. The "192.168.x.x" IP address scheme is part of a "reserved" block of addresses intended strictly for networks that are not connected to the Internet. When using addresses of this type, the host computer must be configured to an address in this range in order to "see" the HVR and access the HVR's Web pages.

By selecting the Network Setup link in Figure 12, the user is taken to the page shown in Figure 13 requiring a password entry. The default password for the HVR is "L3HVR". Upon entering the correct password, the user will be taken to the page shown in Figure 14 where the network parameters can be set as required. Changes made will not take effect until the HVR is powered down and back up. Once the settings have been made, the HVR can be connected to the VDR network where it should respond at the configured IP address.

Using the page shown in Figure 15, the user can modify or set up the memory areas used for data storage on the HVR. Each of these areas or partitions require that two parameters be specified: the partition size and the partition name. This page shows the number of currently available memory devices as well as the per device size in Kilobytes. The user partitions and allocates the HVR memory data storage from the available device pool. The configuration of the memory areas requires that the user specify the size of each memory partition in device units, expressed as the number of devices to be allocated to that memory area. The partition size is thus the device size multiplied by the number of devices.

The HVR system internally allocates devices from its internal free pool of devices in order to fill the request. The partition configuration request is processed starting with partition 0 (ZERO) and proceeding to partition 9 (NINE). The partition allocations cannot exceed the number of available devices. Partition allocations are processed until all available devices have been allocated.

The partition name is required during the actual recording of data into a partition. The partition/stream name is to be used by the client application wishing to establish a data connection to the HVR for the storage of data to a particular partition. The connection set up for a data stream requires the partition name. The VDR must use the same partition (stream) name established during the HVR memory configuration in order to establish communication with that partition (stream).

Once the HVR has been configured, it appears to the outside world as a smart interface to a "pool" of nonvolatile memory. Application programs running on one or more data acquisition systems coupled to the ship's network can utilize the pre-allocated memory partitions for storage and retrieval purposes. Each stream partition is treated as a virtual storage loop in which new data continuously overwrites the oldest data in the partition. The HVR processor keeps track of the current write location in the virtual loop for each partition and preserves this through power cycles in nonvolatile storage.

In order to store data in a previously allocated partition, or retrieve data from such a partition, software on the client acquisition system must "open" a TCP/IP Socket Connection to the Data Acquisition Server in the HVR. This Server accepts Socket Connections at Port 5000 of the IP Address assigned to the HVR. Once a connection has been made to the HVR Data Acquisition Server, the acquisition software sends a command which identifies the target partition and the requested operation. The partition is identified by using the name that was specified for the stream during the configuration of the memory pool.

The partition stream can be opened for read or write access, or to request "write status" information. Once the socket connection has been established, and the appropriate command issued, data is sent or received over the Socket Connection. The HVR Data Acquisition Server will accept simultaneous socket connections from multiple client processes as well as multiple socket connections from a single client process. This automatically results from the Client-Server model of the "Berkely Software Distribution" socket interface that is used by the HVR. There are, however, some limitations imposed by the HVR software itself.

Specifically, there can be only one active "Write" client connection associated with a particular Stream Partition. The HVR does, however, support simultaneous reading from Partitions while writing. The "status query" is supported on a Stream regardless of whether or not there is an active "Read" or "Write" connection on that partition.

The application layer above TCP/IP is the functional interface between a client data acquisition subsystem and the HVR. It is assumed that the lower protocol layers ensure error-free and timely delivery of messages in both directions. Furthermore, an ETHERNET HVR interface with TCP/IP layers does not rule out multiple concurrent Users of the HVR. Bandwidth of the storage media and communications channels are, of course, issues which must be considered at the system level.

All messages sent to the HVR begin with a single byte message length value. This represents the number of bytes (characters) in the remainder of the message. For example, the message for opening a partition named "VDR_Radar" for writing would consist of a byte value of 0x0B (11 characters in the remainder of the message), followed by the ASCII characters: WVDR_Radar, followed by a Null terminator (byte value 0x00). Note that the Partition Name, "VDR_Radar" is a 9--character ASCII sequence which is to be followed by a Null terminator character. Along with the 'W' character (for writing) that precedes the Partition Name, the total length of the message is 11 characters. There should be no additional spaces within the message. The "count" byte can be thought of as a specification of exactly how many more characters will be following in order to complete the message. Since the "count" specification is a single byte, the maximum message length is 255 characters.

Certain HVR messages can include one or more optional arguments. In all cases the optional arguments follow the Null terminator of the base message string. Each argument is, itself, a Null--terminated ASCII string. Numerical values contained in optional arguments are ASCII decimal strings. An example of an optional argument which includes a decimal value would be one which limits the amount of data to be sent by the HVR in response to the "Read from Stream" command.

In this case, the added argument might be the string "X25". The 'X' character indicates that this is the "Xfer Count" (transfer count) argument, and the "25" is a two--character ASCII--decimal value which represents 25 Mbytes. The "X25" string represents four additional bytes of the complete command (there must be a Null terminator), and would be so reflected in the message length byte that precedes the base message string. It is essential that the base message string, and each optional argument string be followed by a Null terminator byte. There are some optional arguments that consist of a single ASCII character, and these too must be followed by the Null terminator byte.

Since the message length byte that precedes a request message tells the HVR exactly how many additional bytes must be consumed from the Socket stream in order to obtain the request, that byte must reflect all of the strings and their associated Null terminators. Otherwise the HVR will not "consume" the entire message before attempting to interpret it.

The "Write to Stream" command is sent by the acquisition system as the first data on a successfully opened TCP/IP Socket Connection. This command consists of an upper or lower--case 'w', followed by the Stream Name that was specified when the stream partition was allocated, followed by a zero value to terminate the Stream Name string. Note that the command must be preceded by the "count byte" as described above.

If the HVR processor finds this to be a valid Stream Name, it will reply with a single character response of 'G'. If there is a problem with the attempt to establish the "write" connection, one of several error responses will be sent. Once the acquisition client has received a 'G' response, it can begin to send data on the open socket connection stream.

Optional arguments for the "Write to Stream" command are: "N", for "No Wrap" mode, and "R" for "Reset Write Indices". Neither option takes any additional parameters.

The "No Wrap" option causes the HVR to first reset the Write location to the start of the Partition before beginning to store any data, and also to stop writing to the specified Stream when the end of the Partition is reached. This is primarily useful in testing the integrity of a Partition.

The "Reset Indices" option causes the Write location to be reset to the start of the Partition before beginning to store any data. This does, however, allow writing to "Wrap" when the end of the Partition is reached. This is also intended as a "test" feature.

The "Read from Stream" command is sent by the acquisition system as the first data on a successfully opened TCP/IP Socket Connection. This command consists of an upper or lower case 'r', followed by the Stream Name that was specified when the stream partition was allocated, followed by a zero value to terminate the Stream Name string. Note that the command must be preceded by the "count byte" as described above.

If the HVR processor finds this to be a valid Stream Name, it will reply with a single character response of 'G'. If there is a problem with the attempt to establish the "read" connection, one of several error responses will be sent. Once the acquisition client has received a 'G' response, it can begin to read data from the open socket connection stream.

Optional arguments for the "Read from Stream" command are: "N", for "No Wrap" mode, "O" for specifying an "Offset" in Mbytes at which the Reading should begin, and "X" for specifying the total number of Mbytes to be sent by the HVR.

The "N" option is the counterpart of the "No Wrap" option that is available on the "Write to Stream" command. This option causes the HVR to begin reading at the top of the Partition, and stop reading when the end of the Partition is reached. This is typically used to verify the content of a partition that was filled, for test purposes, using the "N" option on the "Write to Stream" operation.

The "O"" and "X" options are similar in that they are both followed by an ASCII-decimal value that represents a number in Mbytes. The "O" option represents a backwards offset, relative to the current Write location, at which the reading of data from the Partition is to begin. This is a positive value expressed in Mbytes.

For example, an argument of "015" would back up by 15 Mbytes from the current Write location. That is, it would set the Read pointer back at the data that was stored 15 Mbytes ago. There are some constraints associated with this option. For example, if a value is specified which is larger than the Partition storage area, then the Read location remains at the current Write location. Also, if the Partition has not been "filled" since the last time the Write location was reset, then the offset will not be adjusted backwards beyond the top of the Partition. This is because data which "follows" the current Write location is meaningless.

The "Status Query on Stream" command is sent by the acquisition system as the first data on a successfully opened TCP/IP Socket Connection. This command consists of an upper or lower case 's', followed by the Stream Name that was specified when the stream partition was allocated, followed by a zero value to terminate the Stream Name string. Note that the command must be preceded by the "count byte" as described above.

If the HVR processor finds this to be a valid Stream Name, it will reply with a single character response of 'G'. If there is a problem with the attempt to establish the "status query" connection, one of several error responses will be sent. If the 'G' response is received, it will be followed by a "Status Response" message which conforms to the message format described for commands to the HVR. That is, the remainder of the response will consist of a "count byte" followed by a Null terminated string. The string will be of the form: ''L:n T:n".

Note that the quotes are NOT part of the response, but are shown to emphasize that the entire response is an ASCII, Null terminated string. The letter 'n' indicates an ASCII decimal representation of the appropriate error count. The first 'n' value is the "Loop Error Count" and represents the number of write errors that occurred on the current pass through the Stream Partition.

This value is cleared automatically at the start of each pass through the Partition's memory loop. The second 'n' represents the "Total Error Count", and is the accumulated number of errors since the counters were last cleared (manually or as a result of setting up the Partition Map).

The response to the 'W', 'R', or 'S' commands is a single ASCII character. There is no "count byte" or Null terminator.

If the Partition Name is valid and access has been established, the response is a 'G' character. If the Partition Name is not recognized, the response is an 'S' character. If the Partition has no devices allocated to it, the response is an 'E' character. If the Partition is busy (another client is already writing in the Partition), the response is a 'B' character. If the Partition is Out of Service for some other reason (failed devices, etc.), the response is an 'O' character.

Note that the response to the 'S' command is somewhat unique in that it follows the "single ASCII character" form, but if a valid request was made, continues with a "full message" type of response.

The HVR allows only one Client to be writing to a particular Partition at a time. That is, only one 'W' connection will be allowed for each in-service Partition. The HVR will also accept one or more 'R' connections for a Partition, even if there is currently an active 'W' connection. Issues related to the effects of multiple connections on performance (system throughput) must be carefully considered.

The response to a 'W' command, for a Partition that already has an active 'W' connection, is the 'B' message (busy).

The current implementation of the HVR subsystem is capable of data transfer to or from the protected memory store at a rate of around 1.5 Mbits per second (using 10-Base T ETHERNET). That is, a data acquisition host or hosts can send data to the protected memory store, or retrieve data from the store, at approximately this rate, when all other conditions are optimal.

When sending data to the HVR, the maximum rate can only be achieved if at least three partitions are being written to concurrently. This is a consequence of the architecture of the memory devices being used in the protected memory store and the HVR software that manages the devices. That is, the maximum write rate relies on the HVR software being able to continuously manage concurrent writes in multiple devices.

There are essentially two buffers used to process the data. The first is the receipt of data packets into an incoming queue, the throughput of this process is approximately 1.5 Mbits per second. The second is in the processing of those data packets from the incoming queue to the flash devices, the throughput of this process is dependent on how the flash chips are managed/mapped. A write to a flash device is slow, relatively speaking, and the software must wait for a write to complete on a given chip before another write can begin. Therefore, if there is only one partition, the writes are all sequential and the throughput will slow to the rate of the chip write function (which can be chip and temperature dependent).

If however, there are multiple partitions, concurrent writes can occur because the software will be writing to different chips. This effectively increases the throughput by n times, where n is defined by the number of partitions. Since the throughput of the process to receive incoming data packets is approximately 1.5 Mbits per second, the goal of the host computer is to partition the flash devices so that this rate can be achieved. Experimentation has shown at least three to four partitions are required.

The maximum read rate is also around 1.5 Mbits per second, assuming that there is no simultaneous writing. The rate of a chip read function is much faster than the write so even if there is only one read occurring (sequential access to a chip) it can keep up with the rate of the process to receive incoming data packets.

When reading and writing are performed together, the available bandwidth of the HVR will be distributed between the operations in a manner that will vary depending on system dynamics.

There have been described and illustrated herein a hardened voyage data recorder and an example of software for using the recorder over an ETHERNET network. While particular embodiments of the invention have been described, it is not intended that the invention be limited thereto, as it is intended that the invention be as broad in scope as the art will allow and that the specification be read likewise. In particular, the specific arrangement of web pages and the specific communications protocol described herein represent a presently preferred embodiment, but the invention is not limited thereto.

It will therefore be appreciated by those skilled in the art that yet other modifications could be made to the provided invention without deviating from its scope as so claimed.

## Claims

1. A hardened voyage data recorder (1), comprising:
a. a removable memory subsystem (14) including memory circuitry to store voyage data, the subsystem having an upper flange (46);
b. a mounting base subsystem (12) having a lower flange (28) removably coupled to the upper flange (46) of the memory subsystem (14);
c. a quick release clamp (48, 50, 52) attaching the memory subsystem (14) to the mounting base subsystem (12);
d. a bracket (38) disposed on the removable memory subsystem (14); and
e. an underwater locator beacon (40) externally mounted to the removable memory subsystem (14) by the bracket (38), the underwater locator beacon (40) including dual activation moisture sensors to activate the underwater locator beacon when submersed while avoiding activation when subjected to spray, rain, or hosing.

2. A hardened voyage data recorder according to claim 1 further comprising electronic circuits for electronically accessing said memory subsystem, wherein said electronic circuits provide an ETHERNET access port for coupling said hardened voyage recorder to an ETHERNET network.

3. A hardened voyage data recorder according to claim 2 wherein said electronic circuits include firmware which provides TCP/IP access over ETHERNET to said circuits.

4. A hardened voyage data recorder according to claim 3 wherein said firmware includes web pages for configuring said hardened voyage data recorder.

5. A hardened voyage data recorder according to claim 2 wherein said electronic circuits are located in said mounting base subsystem.

6. A hardened voyage data recorder according to claim 2 wherein said mounting base subsystem includes at least one watertight cable connector.

7. A hardened voyage data recorder according to claim 2 wherein said mounting base subsystem includes a first watertight cable connector for coupling with a power supply and a second cable connector for coupling with an ETHERNET network.

8. A hardened voyage data recorder according to claim 2 wherein said electronic circuits accept both 110/220 VAC and 24 VDC power supplies.

9. A hardened voyage data recorder according to claim 1 further comprising a quick release V-clamp (48,50,52), wherein said removable memory subsystem (14) has an upper flange (46), said mounting base subsystem (12) has a lower flange (28), and said quick release V-claim engages said upper flange (46) and said lower flange (28) whereby said memory subsystem (14) and said base subsystem (12) are removably coupled to each other.

10. A hardened voyage data recorder according to claim 9 wherein said quick release V-clamp (48,50,52) has two quick release levers.

11. A hardened voyage data recorder according to claim 1 wherein said removable memory subsystem includes non-volatile memory enclosed within a boiler.

12. A hardened voyage data recorder according to claim 11 wherein said mounting base subsystem includes at least one watertight cable connector.

13. A hardened voyage data recorder according to claim 12, wherein said mounting base subsystem includes a first watertight cable connector for coupling with a power supply and a second cable connector for coupling with a data source.

14. A hardened voyage data recorder according to claim 9 wherein one of said upper flange (46) and said lower flange (28) has a groove adapted to receive an O-ring (36).

15. A hardened voyage data recorder according to claim 9 wherein said lower flange (28) has two concentric grooves (30,32), each adapted to receive an O-ring (36).

16. A hardened voyage data recorder according to claim 15 further comprising one O-ring (36) and one mesh gasket (34), one disposed in one of said two concentric grooves and the other disposed in the other of said two concentric grooves.

17. A hardened voyage data recorder according to claim 1 wherein said mounting base subsystem includes non-volatile memory enclosed within a boiler.

18. A hardened voyage data recorder according to claim 17 wherein said mounting bases subsystem includes a first watertight cable connector for coupling with a power supply and a second cable connector for coupling with a data source.

19. A hardened voyage data recorder according to claim 1 further comprising at least one memory interface converter chip coupled to said removable memory subsystem.

20. A hardened voyage data recorder according to claim 1 wherein said removable memory subsystem includes a stacked memory and a plurality of memory interface chips arranged for communication with a processor such that a large number of memory chips may be driven.

21. A hardened voyage data recorder according to claim 20 wherein said mounting base subsystem includes a first watertight cable connector for coupling with a power supply and a second cable connector for coupling with a data source.

22. A method of making a hardened voyage data recorder, comprising:
providing a removable memory subsystem (14) including memory circuitry to store voyage data, the subsystem having an upper flange (46);
providing a mounting base subsystem (12) having a lower flange (28) removably coupled to the upper flange of the memory subsystem (14);
attaching the removable memory subsystem (14) to the mounting base subsystem (12) using a quick release clamp (48, 50, 52);
providing a bracket (38) on the removable memory subsystem; and
mounting an underwater locator beacon (40) externally to the removable memory subsystem by the bracket, the underwater locator beacon including dual activation moisture sensors to activate the underwater locator beacon when submersed while avoiding activation when subjected to spray, rain, or hosing.

## Patentansprüche

1. Verstärkter Navigationsdatenrekorder (1), der Folgendes umfasst:
a. ein entfernbares Speichersubsystem (14) mit einer Speicherschaltung zum Speichern von Navigationsdaten, wobei das Subsystem einen oberen Flansch (46) aufweist;
b. ein Montagebasissubsystem (12) mit einem unteren Flansch (28), der entfernbar mit dem oberen Flansch (46) des Speichersubsystems (14) gekoppelt ist;
c. eine Schnelllöseklammer (48, 50, 52), mit der ein Speichersubsystem (14) an dem Montagebasissubsystem (12) angebracht wird;
d. eine Halterung (38), die an dem entfernbaren Speichersubsystem (14) angeordnet ist; und
e. einen Unterwasser-Positionsgeber (40), der mit der Halterung (38) extern an dem entfernbaren Speichersubsystem (14) montiert ist, wobei der Unterwasser-Positionsgeber (40) zwei Aktivierungsfeuchtigkeitssensoren aufweist, um den Unterwasser-Positionsgeber wenn eingetaucht zu aktivieren, aber nicht zu aktivieren, wenn er Sprüh-, Regen- oder Spritzwasser ausgesetzt wird.

2. Verstärkter Navigationsdatenrekorder nach Anspruch 1, der ferner elektronische Schaltungen zum elektronischen Zugreifen auf das genannte Speichersubsystem umfasst, wobei die genannten elektronischen Schaltungen einen ETHERNET-Zugangsport zum Verbinden des genannten verstärkten Navigationsrekorders mit einem ETHERNET-Netzwerk bereitstellen.

3. Verstärkter Navigationsdatenrekorder nach Anspruch 2, wobei die genannten elektrischen Schaltungen Firmware beinhalten, die TCP/IP-Zugang über ETHERNET zu den genannten Schaltungen bietet.

4. Verstärkter Navigationsdatenrekorder nach Anspruch 3, wobei die genannte Firmware Webseiten zum Konfigurieren des genannten verstärkten Navigationsdatenrekorders beinhaltet.

5. Verstärkter Navigationsdatenrekorder nach Anspruch 2, wobei sich die genannten elektronischen Schaltungen in dem genannten Montagebasissubsystem befinden.

6. Verstärkter Navigationsdatenrekorder nach Anspruch 2, wobei das genannte Montagebasissubsystem wenigstens einen wasserdichten Kabelverbinder aufweist.

7. Verstärkter Navigationsdatenrekorder nach Anspruch 2, wobei das genannte Montagebasissubsystem einen ersten wasserdichten Kabelverbinder zum Anschließen an eine Stromversorgung und einen zweiten Kabelverbinder zum Anschließen an ein ETHERNET-Netzwerk beinhaltet.

8. Verstärkter Navigationsdatenrekorder nach Anspruch 2, wobei die genannten elektronischen Schaltungen sowohl 110/220 VAC als auch 24 VDC Stromversorgungen akzeptieren.

9. Verstärkter Navigationsdatenrekorder nach Anspruch 1, die ferner eine Schnelllöse-V-Klammer (48, 50, 52) umfasst, wobei das genannte entfernbare Speichersubsystem (14) einen oberen Flansch (46) aufweist, wobei das genannte Montagebasissubsystem (12) einen unteren Flansch (28) hat und wobei die genannte Schnelllöse-V-Klammer in den genannten oberen Flansch (46) und den genannten unteren Flansch (28) eingreift, so dass das genannte Speichersubsystem (14) und das genannte Basissubsystem (12) entfernbar miteinander gekoppelt werden.

10. Verstärkter Navigationsdatenrekorder nach Anspruch 9, wobei die genannte Schnelllöse-V-Klammer (48, 50, 52) zwei Schnelllösehebel hat.

11. Verstärkter Navigationsdatenrekorder nach Anspruch 1, wobei das genannte entfernbare Speichersubsystem einen in einem Kessel eingeschlossenen nichtflüchtigen Speicher aufweist.

12. Verstärkter Navigationsdatenrekorder nach Anspruch 11, wobei das genannte Montagebasissubsystem wenigstens einen wasserdichten Kabelverbinder aufweist.

13. Verstärkter Navigationsdatenrekorder nach Anspruch 12, wobei das genannte Montagebasissubsystem einen ersten wasserdichten Kabelverbinder für den Anschluss an eine Stromversorgung und einen zweiten Kabelverbinder für den Anschluss an eine Datenquelle beinhaltet.

14. Verstärkter Navigationsdatenrekorder nach Anspruch 9, wobei der genannte obere Flansch (46) oder der genannte untere Flansch (28) eine Rille haben, die zur Aufnahme eines O-Rings (36) gestaltet ist.

15. Verstärkter Navigationsdatenrekorder nach Anspruch 9, wobei der genannte untere Flansch (28) zwei konzentrische Rillen (30, 32) hat, die jeweils zur Aufnahme eines O-Rings (36) gestaltet sind.

16. Verstärkter Navigationsdatenrekorder nach Anspruch 15, die ferner einen O-Ring (36) und eine Maschendichtung (34) umfasst, von denen eine(r) in einer der genannten zwei konzentrischen Rillen und der/die andere in der anderen der genannten zwei konzentrischen Rillen angeordnet ist.

17. Verstärkter Navigationsdatenrekorder nach Anspruch 1, wobei das genannte Montagebasissubsystem einen in einem Kessel eingeschlossenen nichtflüchtigen Speicher beinhaltet.

18. Verstärkter Navigationsdatenrekorder nach Anspruch 17, wobei das genannte Montagebasissubsystem einen ersten wasserdichten Kabelverbinder zum Anschließen an eine Stromversorgung und einen zweiten Kabelverbinder zum Anschließen an eine Datenquelle beinhaltet.

19. verstärkter Navigationsdatenrekorder nach Anspruch 1, die ferner wenigstens einen Speicherschnittstellen-Konverterchip aufweist, der mit dem genannten entfernbaren Speichersubsystem gekoppelt ist.

20. Verstärkter Navigationsdatenrekorder nach Anspruch 1, wobei das genannte entfernbare Speichersubsystem einen gestapelten Speicher und mehrere Speicherschnittstellenchips beinhaltet, die für die Kommunikation mit einem Prozessor angeordnet sind, so dass eine große Zahl von Speicherchips angesteuert werden kann.

21. Verstärkter Navigationsdatenrekorder nach Anspruch 20, wobei das genannte Montagebasissubsystem einen ersten wasserdichten Kabelverbinder für den Anschluss an eine Stromversorgung und einen zweiten Kabelverbinder für den Anschluss an eine Datenquelle beinhaltet.

22. Verfahren zur Herstellung eines verstärkten Navigationsdatenrekorders, das die folgenden Schritte beinhaltet:
Bereitstellen eines entfernbaren Speichersubsystems (14) mit einer Speicherschaltung zum Speichern von Navigationsdaten, wobei das Subsystem einen oberen Flansch (46) aufweist;
Bereitstellen eines Montagebasissubsystems (12) mit einem unteren Flansch (28), der entfernbar mit dem oberen Flansch des Speichersubsystems (14) gekoppelt ist;
Anbringen des entfernbaren Speichersubsystems (14) am Montagebasissubsystem (12) mit einer Schnelllöseklammer (48, 50, 52);
Bereitstellen einer Halterung (38) an dem entfernbaren Speichersubsystem; und
Montieren eines Unterwasser-Positionsgebers (40) extern an dem entfernbaren Speichersubsystem mit der Halterung, wobei der Unterwasser-Positionsgeber (40) zwei Aktivierungsfeuchtigkeitssensoren aufweist, um den Ünterwasser-Positionsgeber wenn eingetaucht zu aktivieren, aber nicht zu aktivieren, wenn er Sprüh-, Regen- oder Spritzwasser ausgesetzt wird.

## Revendications

1. Enregistreur renforcé de données de navigation (1), comprenant :
a. un sous-système de mémoire amovible (14) comportant des circuits de mémoire pour stocker des données de navigation, le sous-système ayant une bride supérieure (46) ;
b. un sous-système de base de montage (12) ayant une bride inférieure (28) couplée de façon amovible à la bride supérieure (46) du sous-système de mémoire (14) ;
c. une pince de déconnexion rapide (48, 50, 52) fixant le sous-système de mémoire (14) au sous-système de base de montage (12) ;
d. un support (38) disposé sur le sous-système de mémoire amovible (14) ; et
e. une balise de positionnement sous-marine (40) montée à l'extérieur du sous-système de mémoire amovible (14) par le support (38), la balise de positionnement sous-marine (40) comportant des capteurs d'humidité à double activation pour activer la balise de positionnement sous-marine quand elle est submergée tout en évitant son activation quand elle est soumise aux embruns, à la pluie et à un arrosage.

2. Enregistreur renforcé de données de navigation selon la revendication 1, comprenant en outre des circuits électroniques pour accéder électroniquement audit sous-système de mémoire, dans lequel lesdits circuits électroniques fournissent un port d'accès ETHERNET pour coupler ledit enregistreur de données de navigation à un réseau ETHERNET.

3. Enregistreur renforcé de données de navigation selon la revendication 2, dans lequel lesdits circuits électroniques comportent un micrologiciel qui fournit un accès TCP/IP sur ETHERNET auxdits circuits.

4. Enregistreur renforcé de données de navigation selon la revendication 3, dans lequel ledit micrologiciel comporte des pages Internet pour configurer ledit Enregistreur renforcé de données de navigation.

5. Enregistreur renforcé de données de navigation selon la revendication 2, dans lequel lesdits circuits électroniques sont situés dans ledit sous-système de base de montage.

6. Enregistreur renforcé de données de navigation selon la revendication 2, dans lequel ledit sous-système de base de montage comporte au moins un connecteur de câble étanche à l'eau.

7. Enregistreur renforcé de données de navigation selon la revendication 2, dans lequel ledit sous-système de base de montage comporte un premier connecteur de câble étanche à l'eau pour le couplage à une alimentation électrique et un second connecteur de câble pour le couplage à un réseau ETHERNET.

8. Enregistreur renforcé de données de navigation selon la revendication 2, dans lequel lesdits circuits électroniques acceptent des alimentations électriques de 110/220 V C.A. et de 24 V.C.C.

9. Enregistreur renForcé de données de navigation selon la revendication 1, comprenant en outre une pince en V de déconnexion rapide (48, 50, 52), dans lequel ledit sous-système de mémoire amovible (14) a une bride supérieure (46), ledit sous-système de base de montage (12) a une bride inférieure (28), et ladite pince en V de déconnexion rapide engage ladite bride supérieure (46) et ladite bride inférieure (28), de telle sorte que ledit sous-système de mémoire (14) et ledit sous-système de base (12) soient couplés de façon amovible l'un à l'autre.

10. Enregistreur renforcé de données de navigation selon la revendication 9, dans lequel ladite pince en V de déconnexion rapide (48, 50, 52) comporte deux leviers de déconnexion rapide.

11. Enregistreur renforcé de données de navigation selon la revendication 1, dans lequel ledit sous-système de mémoire amovible comporte une mémoire rémanente enfermée dans un "ballon".

12. Enregistreur renforcé de données de navigation selon la revendication 11, dans lequel ledit sous-système de base de montage comporte au moins un connecteur de câble étanche à l'eau.

13. Enregistreur renforcé de données de navigation selon la revendication 12, dans lequel ledit sous-système de base de montage comporte un premier connecteur de câble étanche à l'eau pour le couplage à une alimentation électrique et un second connecteur de câble pour le couplage à une source de données.

14. Enregistreur renforcé de données de navigation selon la revendication 9, dans lequel l'une de ladite bride supérieure (46) et de ladite bride inférieure (28) comporte une gorge adaptée pour recevoir un joint torique (36).

15. Enregistreur renforcé de données de navigation selon la revendication 9, dans lequel ladite bride inférieure (28) comporte deux gorges concentriques (30, 32), adaptées chacune pour recevoir un joint torique (36).

16. Enregistreur renforcé de données de navigation selon la revendication 15, comprenant en outre un joint torique (36) et un joint maillé (34), l'un disposé dans l'une desdites deux gorges concentriques, et l'autre disposé dans l'autre desdites deux gorges concentriques.

17. Enregistreur renforcé de données de navigation selon la revendication 1, dans lequel ledit sous-système de base de montage comporte une mémoire rémanente enfermée dans un "ballon".

18. Enregistreur renforcé de données de navigation selon la revendication 17, dans lequel ledit sous-système de base de montage comporte un premier connecteur de câble étanche à l'eau pour le couplage à une alimentation électrique et un second connecteur de câble pour le couplage à une source de données.

19. Enregistreur renforcé de données de navigation selon la revendication 1, comprenant en outre au moins une puce de convertisseur d'interface mémoire couplée audit sous-système de mémoire amovible.

20. Enregistreur renforcé de données de navigation selon la revendication 1, dans lequel ledit sous-système de mémoire amovible comporte une mémoire empilée et une pluralité de puces d'interface mémoire agencées pour communiquer avec un processeur de telle sorte qu'un grand nombre des puces de mémoire puisse être commandées.

21. Enregistreur renforcé de données de navigation selon la revendication 20, dans lequel ledit sous-système de base de montage comporte un premier connecteur de câble étanche à l'eau pour le couplage à une alimentation électrique et un second connecteur de câble pour le couplage à une source de données.

22. Procédé de fabrication d'un Enregistreur renforcé de données de navigation, comprenant :
la fourniture d'un sous-système de mémoire amovible (14) comportant des circuits de mémoire pour stocker les données de navigation, le sous-système ayant une bride supérieure (46) ;
la fourniture d'un sous-système de base de montage (12) ayant une bride inférieure (28) couplée de façon amovible à la bride supérieure du sous-système de mémoire (14) ;
la fixation du sous-système de mémoire (14) au sous-système de base de montage (12) au moyen d'une pince de déconnexion rapide (48, 50, 52) ;
la fourniture d'un support (38) sur le sous-système de mémoire amovible ; et
le montage d'une balise de positionnement sous-marine (40) à l'extérieur du sous-système de mémoire amovible par le support, la balise de positionnement sous-marine comportant des capteurs d'humidité à double activation pour activer la balise de positionnement sous-marine quand elle est submergée tout en évitant son activation quand elle est soumise aux embruns, à la pluie et à un arrosage.
